# EUROPEAN PATENT APPLICATION

(11) **EP 3 996 041 A1**
(43) Date of publication of application: **11.05.2022**
(21) Application number: 20836859.7
(22) Date of filing: 09.06.2020
(51) Int. Cl.: G06T 7/55

(54) **PARAMETER ADJUSTMENT METHOD AND APPARATUS FOR DEPTH SENSOR, AND ELECTRONIC DEVICE**

(30) Priority: 11.07.2019 CN 201910623060
(71) Applicant: GUANGDONG OPPO MOBILE TELECOMMUNICATIONS CORP., LTD., Dongguan, Guangdong 523860 (CN)
(72) Inventor: KANG, Jian, Dongguan, Guangdong 523860 (CN)
(74) Representative: Taor, Simon Edward William
(86) International application number: PCT/CN2020/095024
(87) International publication number: WO 2021/004216

(57) **Abstract**

A parameter adjustment method, a parameter adjustment apparatus, an electronic device and a readable storage medium. Said method comprises: (101) acquiring a depth map acquired by a depth sensor; (102) performing statistics of various pixel units in the depth map, to obtain the distribution of depth and the distribution of confidence; and (103) according to the distribution of depth and the distribution of confidence, adjusting operation parameters of the depth sensor.

## Description

### CROSS REFERENCE TO RELATED APPLICATION

This application claims priority to Chinese Application No. 201910623060.1, filed on July 11, 2019. The entire disclosure of the above application is incorporated herein by reference.

### FIELD OF THE DISCLOSURE

The present disclosure relates to a field of electronic device technologies, and more particularly, to a parameter adjustment method and a device for a depth sensor, an electronic device, and a computer-readable storage medium.

### BACKGROUND

Currently, in order to improve quality of depth images, the depth images can be filtered. In the prior arts, depth images are filtered by a filtering algorithm using bilateral filtering, anisotropic filtering, filtering based on fixed thresholds, and the like.

However, in actual application scenarios, there are different requirements for depth images. For example, edges of hands need to be clearly visible for gesture scenarios, and it is necessary to remove abnormal depth values as much as possible for simultaneous localization and mapping (SLAM) scenarios.

### SUMMARY

The present disclosure aims to solve one of the technical problems in the related technology at least to a certain extent.

The present disclosure provides a parameter adjustment method and device for a depth sensor and an electronic device to determine operation parameters of the depth sensor according to a depth distribution and a confidence coefficient distribution in a depth image, which avoids a technical problem of lower quality of collected depth images caused by using a depth sensor with fixed operation parameters to collect depth images in different scenarios in the prior art.

In a first aspect of the present disclosure, a parameter adjustment method for a depth sensor includes: acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and adjusting operation parameters of the depth sensor according to the depth distribution and the confidence coefficient distribution.

The parameter adjustment device for the depth sensor of the embodiment of the present disclosure acquires a depth image collected by the depth sensor, wherein each pixel unit of the depth image has a corresponding depth and a confidence coefficient of the depth; performs a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusts operation parameters of the depth sensor according to the depth distribution and the confidence coefficient distribution. Therefore, the operation parameters of the depth sensor are determined according to the depth distribution and the confidence coefficient distribution in the depth image, which avoids the technical problem of lower quality of collected depth images caused by using a depth sensor with fixed operation parameters to collect depth images in different scenarios in the prior art, thereby ensuring the quality of the output depth images.

In a second aspect of the present disclosure, an electronic device includes a processor and a memory storing computer program executable by the processor perform operations comprising: acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and adjusting operation parameters of the depth sensor according to the depth distribution and the confidence coefficient distribution.

In a third aspect of the present disclosure, a non-transitory computer-readable storage medium stores computer program executable by a processor perform operations comprising: acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and adjusting operation parameters of the depth sensor according to the depth distribution and the confidence coefficient distribution.

The additional aspects and advantages of the present disclosure will be partly given in the following description, and some will become obvious from the following description, or be understood through the practice of the present disclosure.

### BRIEF DESCRIPTION OF THE DRAWINGS

Some example embodiments of the present invention will be described below in detail with reference to the accompanying drawings.
FIG. 1 is a flowchart of a parameter adjustment method of a depth sensor according to a first embodiment of the present disclosure.
FIG. 2 is a flowchart of a parameter adjustment method of a depth sensor according to a second embodiment of the present disclosure.
FIG. 3 is a flowchart of a parameter adjustment method of a depth sensor according to a third embodiment of the present disclosure.
FIG. 4 is a flowchart of a parameter adjustment method of a depth sensor according to a fourth embodiment of the present disclosure.
FIG. 5 is a flowchart of a parameter adjustment method of a depth sensor according to a fifth embodiment of the present disclosure.
FIG. 6 is a block diagram of a parameter adjustment device for a depth sensor according to an embodiment of the present disclosure. and
FIG. 7 is a block diagram of another parameter adjustment device for a depth sensor according to another embodiment of the present disclosure.

### DETAILED DESCRIPTION

Embodiments of the present application are illustrated in detail in the accompanying drawings, in which like or similar reference numerals refer to like or similar elements or elements having the same or similar functions throughout the specification. The embodiments described below with reference to the accompanying drawings are exemplary and are intended to be illustrative of the present application, and are not to be construed as limiting the scope of the present application.

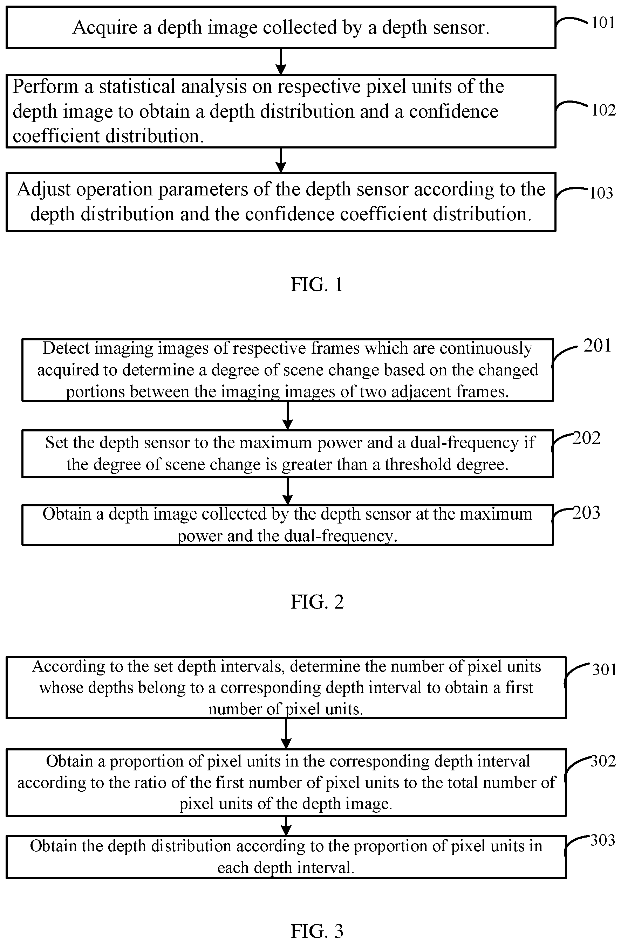

Referring to FIG. 1, a parameter adjustment method for a depth sensor in the embodiment of the present disclosure comprises: acquiring a depth image collected by the depth sensor, where each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusting operation parameters of the depth sensor according to the depth distribution and the confidence coefficient distribution.

In some embodiments, adjusting the operation parameters of the depth sensor according to the depth distribution and the confidence coefficient distribution comprises: determining an operation parameter table according to the depth distribution and the confidence coefficient distribution to obtain corresponding target parameters; adjusting the operation parameters of the depth sensor to the target parameters.

Referring to FIG. 2, the depth sensor is a time-of-flight (TOF) camera, and the operation parameters comprise the power of infrared light emitted by the TOF and the frequency of the infrared light. The frequency of the infrared light comprises a single-frequency and a dual-frequency. Before acquiring the depth image collected by the depth sensor, the method further comprises detecting imaging images of respective frames which are continuously acquired to determine the degree of scene change based on the changed portions between the imaging images of two adjacent frames. Acquiring the depth image collected by the depth sensor comprises: upon a condition that the degree of scene change is greater than a threshold degree, setting the depth sensor to the maximum power and a dual-frequency; acquiring the depth image collected by the depth sensor at the maximum power and the dual-frequency.

In some embodiments, the confidence coefficient is determined based on the intensity of infrared light detected by the depth camera.

Referring to FIG. 3, performing the statistical analysis on respective pixel units of the depth image to obtain the depth distribution and the confidence coefficient distribution comprises: according to the set depth intervals, determining the number of pixel units whose depths belong to a corresponding depth interval to obtain a first number of pixel units; obtaining the proportion of pixel units in the corresponding depth interval according to the ratio of the first number of pixel units to the total number of pixel units of the depth image; obtaining the depth distribution according to the proportion of pixel units in each depth interval.

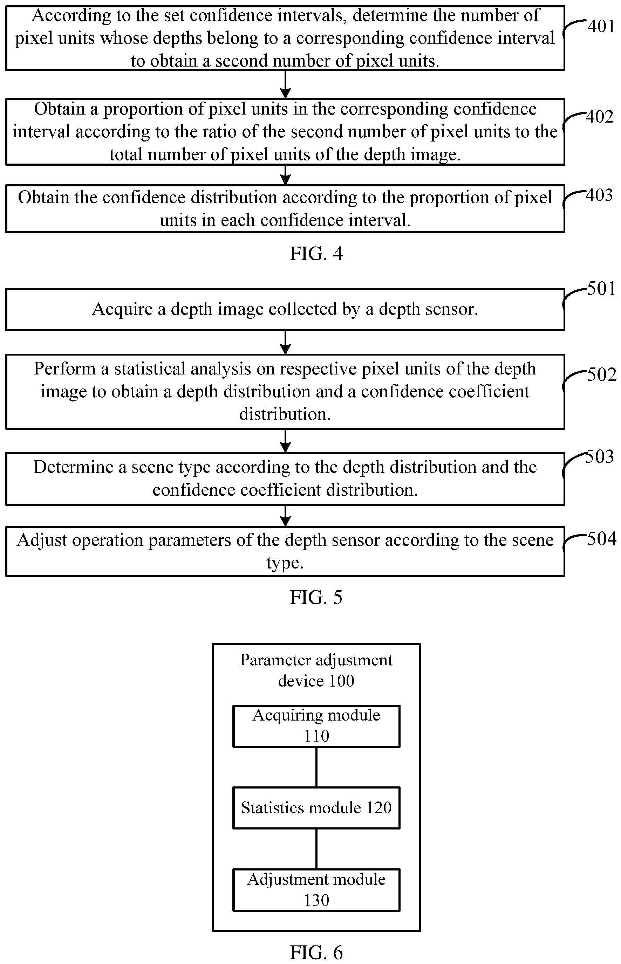

Referring to FIG. 4, performing the statistical analysis on respective pixel units of the depth image to obtain the depth distribution and the confidence coefficient distribution comprises: according to the set confidence intervals, determining the number of pixel units whose depths belong to a corresponding confidence interval to obtain a second number of pixel units; obtaining the proportion of pixel units in the corresponding confidence interval according to the ratio of the second number of pixel units to the total number of pixel units of the depth image; obtaining the confidence distribution according to the proportion of pixel units in each confidence interval.

Referring to FIG. 1 to FIG. 6, a parameter adjustment device comprises an acquiring module 110, a statistics module 120, and an adjustment module 130. The acquiring module 110 is configured to acquire a depth image collected by a depth sensor, wherein each pixel unit of the depth image has a corresponding depth and a confidence coefficient of the depth. The statistics module 120 is configured to perform a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval. The adjustment module 130 is configured to adjust operation parameters of the depth sensor according to the depth distribution and the confidence coefficient distribution.

Referring to FIG. 6, the adjustment module 130 comprises a determining unit and an adjustment unit. The determining unit is configured to determine an operation parameter table according to the depth distribution and the confidence coefficient distribution to obtain corresponding target parameters. The adjustment unit is configured to adjust the operation parameters of the depth sensor to the target parameters.

Referring to FIG. 1, an electronic device comprises a memory, a processor, and a program stored in the memory and running on the processor. When the processor executes the program, a parameter adjustment method for a depth sensor is implemented. The parameter adjustment method comprises: acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusting operation parameters of the depth sensor according to the depth distribution and the confidence coefficient distribution.

In some embodiments, adjusting the operation parameters of the depth sensor according to the depth distribution and the confidence coefficient distribution comprises: determining an operation parameter table according to the depth distribution and the confidence coefficient distribution to obtain corresponding target parameters; adjusting the operation parameters of the depth sensor to the target parameters.

Referring to FIG. 2, the depth sensor is a time-of-flight (TOF) camera, and the operation parameters comprise the power of infrared light emitted by the TOF and the frequency of the infrared light. The frequency of the infrared light comprises a single-frequency and a dual-frequency. Before acquiring the depth image collected by the depth sensor, the method further comprises detecting imaging images of respective frames which are continuously acquired to determine the degree of scene change based on the changed portions between the imaging images of two adjacent frames. Acquiring the depth image collected by the depth sensor comprises: upon a condition that the degree of scene change is greater than a threshold degree, setting the depth sensor to the maximum power and a dual-frequency; acquiring the depth image collected by the depth sensor at the maximum power and the dual-frequency.

The confidence coefficient is determined based on the intensity of infrared light detected by the depth camera.

Referring to FIG. 3, performing the statistical analysis on respective pixel units of the depth image to obtain the depth distribution and the confidence coefficient distribution comprises: according to the set depth intervals, determining the number of pixel units whose depths belong to a corresponding depth interval to obtain a first number of pixel units; obtaining the proportion of pixel units in the corresponding depth interval according to the ratio of the first number of pixel units to the total number of pixel units of the depth image; obtaining the depth distribution according to the proportion of pixel units in each depth interval.

Referring to FIG. 4, performing the statistical analysis on respective pixel units of the depth image to obtain the depth distribution and the confidence coefficient distribution comprises: according to the set confidence intervals, determining the number of pixel units whose depths belong to a corresponding confidence interval to obtain a second number of pixel units; obtaining the proportion of pixel units in the corresponding confidence interval according to the ratio of the second number of pixel units to the total number of pixel units of the depth image; obtaining the confidence distribution according to the proportion of pixel units in each confidence interval.

Referring to FIG. 1, a computer-readable storage medium stores a program. When the program is executed by a processor, a parameter adjustment method for a depth sensor is implemented. The parameter adjustment method comprises: acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusting operation parameters of the depth sensor according to the depth distribution and the confidence coefficient distribution.

Adjusting the operation parameters of the depth sensor according to the depth distribution and the confidence coefficient distribution comprises: determining an operation parameter table according to the depth distribution and the confidence coefficient distribution to obtain corresponding target parameters; adjusting the operation parameters of the depth sensor to the target parameters.

Referring to FIG. 2, the depth sensor is a time-of-flight (TOF) camera, and the operation parameters comprise the power of infrared light emitted by the TOF and the frequency of the infrared light. The frequency of the infrared light comprises a single-frequency and a dual-frequency. Before acquiring the depth image collected by the depth sensor, the method further comprises detecting imaging images of respective frames which are continuously acquired to determine the degree of scene change based on the changed portions between the imaging images of two adjacent frames. Acquiring the depth image collected by the depth sensor comprises: upon a condition that the degree of scene change is greater than a threshold degree, setting the depth sensor to the maximum power and a dual-frequency; acquiring the depth image collected by the depth sensor at the maximum power and the dual-frequency.

The confidence coefficient is determined based on the intensity of infrared light detected by the TOF camera.

Referring to FIG. 3, performing the statistical analysis on respective pixel units of the depth image to obtain the depth distribution and the confidence coefficient distribution comprises: according to the set depth intervals, determining the number of pixel units whose depths belong to a corresponding depth interval to obtain a first number of pixel units; obtaining the proportion of pixel units in the corresponding depth interval according to the ratio of the first number of pixel units to the total number of pixel units of the depth image; obtaining the depth distribution according to the proportion of pixel units in each depth interval.

Referring to FIG. 4, performing the statistical analysis on respective pixel units of the depth image to obtain the depth distribution and the confidence coefficient distribution comprises: according to the set confidence intervals, determining the number of pixel units whose depths belong to a corresponding confidence interval to obtain a second number of pixel units; obtaining the proportion of pixel units in the corresponding confidence interval according to the ratio of the second number of pixel units to the total number of pixel units of the depth image; obtaining the confidence distribution according to the proportion of pixel units in each confidence interval.

Currently, a processing scheme for raw data of a single-frequency depth camera often comprises the following steps:
Step 1: converting the raw data into i data and q data, wherein i, q are represent collected charges, which are sine and cosine values of a delay phase shift angle corresponding to a distance respectively;
Step 2: converting i, q into confidence coefficient pO (|i|+|q|) and phase difference cO (arctan (i/q));
Step 3: performing an error correction on the confidence coefficient p0 to obtain p_cor;
Step 4: determining i, q according to p_cor and c0;
Step 5: filtering i, q;
Step 6: converting the filtered radial depth image into a point cloud depth image.

Step 5 in which i, q are filtered is performed by filtering i, q independently mainly according to the following sub-steps:
a) the overall depth values of the depth image are smoothed by smoothing the corresponding i and q values, wherein the smoothing filtering adopts general filtering algorithms such as anisotropic filtering and median filtering;
b) i, q are converted into depth information and confidence coefficient information;
c) general filtering (including time and space filtering) is performed on the generated depth, wherein the adopted general algorithms may include bilateral filtering, anisotropic filtering, fly pixel/confidence coefficient threshold filtering, which may improve the quality of the output depth image to a certain extent.

However, users need to make reasonable parameter settings for specific scenarios. For users without relevant professional experience or application developers who just use a depth image, such settings are very difficult. In addition, the settings of the depth camera hardware currently use fixed parameters for different scenarios. For example, the TOF power is a fixed value during operation at a high frequency or a low frequency, resulting in low quality of depth images collected in different scenarios. The calculation amount of TOF raw data at different frequencies is also different. Operating in a dual-frequency mode greatly increases the calculation amount compared with a single-frequency mode.

In view of the above-mentioned problems in the prior art, an embodiment of the present disclosure provides a parameter adjustment method for a depth sensor by acquiring a depth image collected by the depth sensor, wherein each pixel unit of the depth image has a corresponding depth and a confidence coefficient of the depth; performing a statistical analysis on respective pixel units of the depth image to obtain a depth distribution and a confidence coefficient distribution; adjusting operation parameters of the depth sensor according to the depth distribution and the confidence coefficient distribution. Therefore, the operation parameters of the depth sensor are determined according to the depth distribution and the confidence coefficient distribution in the depth image, which avoids the technical problem of lower quality of collected depth images caused by using a depth sensor with fixed operation parameters to collect depth images in different scenarios in the prior art, thereby ensuring the quality of the output depth images.

In the following paragraphs, a parameter adjustment method and device for a depth sensor and an electronic device in the embodiments of the present disclosure will be described with reference to the accompanying drawings.

FIG. 1 is a flowchart of a parameter adjustment method of a depth sensor according to a first embodiment of the present disclosure.

In the embodiment of the present disclosure, the parameter adjustment method for the depth sensor is configured in a parameter adjustment device for the depth sensor as an example. The parameter adjustment device for the depth sensor can be applied to any electronic device with a photographing function, so that the electronic device can perform a parameter adjustment function.

The electronic device may be a mobile terminal or a smart camera, which is not limited herein. The mobile terminal may be a hardware device such as a mobile phone, a tablet computer, a personal digital assistant, or a wearable device which has an operation system, a touch screen, and/or a display screen.

As illustrated in FIG. 1, the parameter adjustment method for the depth sensor comprises Blocks 101-103.

Block 101: acquiring a depth image collected by the depth sensor.

Each pixel unit of the depth image has a corresponding depth and a confidence coefficient of the depth.

In the embodiment of the present disclosure, the electronic device may comprise a TOF camera or a TOF video camera. The depth image is acquired by a depth sensor built in the TOF camera or the TOF video camera, and each pixel unit of the collected depth image has a corresponding depth and a confidence coefficient of the depth.

The TOF camera may comprise an infrared light source through which a light signal is emitted outwardly, and a photosensitive module configured to receive a reflected light signal, so that distance measurement may be performed according to a phase change of the emitted light signal and the reflected light signal to obtain the corresponding depth.

In other words, the depth corresponding to each pixel unit is generated based on the phase difference of the infrared light, and the confidence coefficient of the depth is determined based on the light intensity of the reflected light. The greater the intensity of the reflected light is, the larger the confidence coefficient is. Wherein, the shorter the distance to the depth camera is, the smaller the depth is, and the larger the confidence coefficient of the depth is. The longer the distance to the depth camera is, the larger the depth is, and the smaller the confidence coefficient of the depth is.

Block 102: performing a statistical analysis on respective pixel units of the depth image to obtain a depth distribution and a confidence coefficient distribution.

The depth distribution is used to indicate the proportion of pixel units in each depth interval, the confidence coefficient distribution is used to indicate the proportion of pixel units in each confidence interval.

In the embodiment of the present disclosure, after the depth image collected by the depth sensor is acquired, the depth distribution and the confidence coefficient distribution can be obtained by performing the statistical analysis on respective pixel units of the depth image.

Optionally, the statistical analysis is performed on respective pixel units of the depth image to obtain the depth distribution. Specifically, depth intervals are preset for the acquired depth image, and the number of pixel units in each depth interval of the depth image is determined. The ratio of the number of pixel units in each depth interval to the total number of pixel units of the depth image is calculated to obtain the proportion of pixel units in each depth interval and further obtain the depth distribution. Therefore, the depth distribution of the scene within the effective measurement range can be determined.

Optionally, the statistical analysis is performed on respective pixel units of the depth image to obtain the confidence coefficient distribution. Specifically, confidence intervals are preset for the acquired depth image, and the number of pixel units whose depths belong to a corresponding confidence interval is determined. The ratio of the number of pixel units in each confidence interval to the total number of pixel units of the depth image is calculated to obtain the proportion of pixel units in a corresponding confidence interval and further obtain the confidence coefficient distribution.

Block 103: adjusting operation parameters of the depth sensor according to the depth distribution and the confidence coefficient distribution.

Wherein, the operation parameters comprise the power of infrared light emitted by the TOF and the frequency of the infrared light.

In the embodiment of the present disclosure, after the statistical analysis is performed on respective pixel units of the depth image to obtain the depth distribution and the confidence coefficient distribution, the operation parameters of the depth sensor are adjusted according to the depth distribution and the confidence coefficient distribution. That is, the power of infrared light emitted by the TOF and the frequency of the infrared light during the operation of the depth sensor are adjusted, wherein the frequency of infrared light comprises a high frequency, a dual-frequency and a low frequency.

It should be noted that the closer the background is to the depth camera, the smaller the depth is, and the larger the confidence coefficient of the depth is. The farther the background is to the depth camera, the larger the depth is, and the smaller the confidence coefficient of the depth is. Therefore, in the embodiment of the present disclosure, according to the depth distribution and the confidence coefficient distribution, the distance from the background to the depth camera is determined. Then, the operation parameters of the depth sensor are adjusted according to the distance from the depth image to the depth camera.

Optionally, when it is determined that the depth is smaller and the confidence coefficient is larger in response to that the statistical analysis is performed on respective pixel units of the depth image, the depth sensor can be adjusted to use a high frequency for image acquisition. when the confidence coefficient is smaller and the depth is larger, the depth sensor can be adjusted to use a low frequency for image acquisition. For example, when the confidence coefficient is smaller and the depth is about 2.5m, the frequency of the depth sensor is adjusted to 40 Hz. When the confidence coefficient distribution is much smaller and the depth is much larger, the depth sensor can be adjusted to use a dual-frequency for image acquisition. For example, when the confidence coefficient is smaller and the depth exceed 3m, the depth sensor is adjusted to use 40 Hz and 60Hz at the same time to improve the accuracy.

Optionally, after the statistical analysis is performed on respective pixel units of the depth image to obtain the depth distribution and the confidence coefficient distribution, an operation parameter table can be determined according to the depth distribution and the confidence coefficient distribution to obtain corresponding target parameters. Then, the operation parameters of the depth sensor are adjusted to the target parameters.

The operation parameter table may be obtained according to an experimental test and may also be calculated according to TOF hardware parameters. Certainly, it may also be generated by other methods, which is not limited in the embodiment.

The parameter adjustment device for the depth sensor of the embodiment of the present disclosure acquires a depth image collected by the depth sensor, wherein each pixel unit of the depth image has a corresponding depth and a confidence coefficient of the depth; performs a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusts operation parameters of the depth sensor according to the depth distribution and the confidence coefficient distribution. Therefore, the operation parameters of the depth sensor are determined according to the depth distribution and the confidence coefficient distribution in the depth image, which avoids the technical problem of lower quality of collected depth images caused by using a depth sensor with fixed operation parameters to collect depth images in different scenarios in the prior art, thereby ensuring the quality of the output depth images.

Optionally, before the depth image collected by the depth sensor is acquired in Block 101, the imaging images of the respective frames which are continuously acquired can be detected to determine the degree of scene change based on the change in the imaging images between two adjacent frames. The power and frequency of the depth sensor are determined according to the degree of scene change, and then the depth image are collected according to the determined power and frequency of the depth sensor. The above process will be described in detail below in conjunction with Embodiment 2. FIG. 2 is a flowchart of a parameter adjustment method of a depth sensor according to a second embodiment of the present disclosure.

As shown in FIG. 2, the parameter adjustment method of the depth sensor may comprise Blocks 201-203.

Block 201: detecting the imaging images of the respective frames which are continuously acquired to determine the degree of scene change based on the changed portions between the imaging images of two adjacent frames.

Imaging images are two-dimensional images. For example, the electronic device may comprise an RGB camera, and the imaging images are acquired through the RGB camera.

In the embodiment of the present disclosure, the imaging images of two adjacent frames are selected from the imaging images of the respective frames, which are continuously required by the electronic device, to determine the degree of scene change according to the changed portions between the imaging images of the two adjacent frames.

Optionally, the image difference between imaging images of two adjacent frames can be calculated to determine the degree of scene change according to the degree of image difference. In other words, the greater the degree of difference between the imaging images of the two adjacent frames is, the greater the degree of scene change is. Similarly, the smaller the degree of difference between the imaging images of the two adjacent frames is, the smaller the degree of scene change is.

Optionally, the degree of scene change can also be determined by calculating coordinate difference corresponding to the respective pixel units of imaging images of two adjacent frames. In other words, the greater the coordinate difference corresponding to the respective pixel units of the imaging images of the two adjacent frames is, the greater the degree of scene change is. Similarly, the smaller the coordinate difference between the imaging images of the two adjacent frames is, the smaller the degree of scene change is.

Block 202: setting the depth sensor to the maximum power and a dual-frequency upon a condition that the degree of scene change is greater than a threshold degree.

When it is determined that the degree of scene change is greater than the threshold degree according to the changed portions between the imaging images of the two adjacent frames, it is determined that the shooting scene has changed when the imaging images of the adjacent two frames are required. At this time, the depth sensor can be set to the maximum power and the dual-frequency to collect all the information of the scene as accurately as possible.

The frequency of the infrared light emitted by the TOF camera comprises two cases: single-frequency and dual-frequency. For example, the TOF camera may emit light of any one of two frequencies of 40 Hz and 60 Hz, or may emit light at two frequencies of 40 Hz and 60 Hz at the same time.

Block 203: obtaining a depth image collected by the depth sensor at the maximum power and the dual-frequency.

In the embodiment of the present disclosure, after the depth sensor is set to the maximum power and the dual-frequency, the depth sensor is controlled to collect the depth image at the maximum power and the dual-frequency, so as to obtain the depth image collected by the depth sensor at the maximum power and the dual-frequency.

In the embodiment of the present disclosure, setting the depth sensor to acquire a depth image at the dual-frequency refers to controlling the depth sensor to simultaneously use light measurement at two frequencies to obtain two depths, averaging the two depths or summing the weighted two depths to obtain one depth, and, finally, outputting the corresponding depth image.

For example, the depth sensor is controlled to use light with two frequencies of 40 Hz and 60 Hz at the same time to acquire a depth image. Specifically, by processing two depths obtained by light measurement at two frequencies of 40 Hz and 60 Hz, one depth is obtained, and then a depth image is obtained.

When the depth sensor adopts a dual-frequency to collect a depth image, it is necessary to explain that the data at the two frequencies are combined and filtered. Therefore, compared with the single-frequency mode, the calculation amount is greatly increased. In other words, in the dual-frequency mode, the calculation amount of the depth sensor is more than twice the calculation amount in the single-frequency mode. However, when the dual-frequency is used to collect a depth image, the accuracy of depth measurement is improved.

The parameter adjustment method of the depth sensor in the embodiment of the present disclosure detects the continuously acquired imaging images of the respective frames, determines the degree of scene change according to the change in the imaging images of two adjacent frames, and sets the depth sensor to the maximum power and a dual-frequency when it is determined that the degree of scene change is greater than the threshold degree. The depth image collected by the depth sensor at the maximum power and the dual-frequency is acquired. Therefore, when it is determined that the scene has changed when the images are required, the depth sensor is set to the maximum power and the dual-frequency to collect the depth image to ensure that the depth sensor can collect all the information of the scene as much as possible, which improves the accuracy and precision of the collection of the depth image.

Optionally, for performing the statistical analysis on respective pixel units of the depth image to obtain the depth distribution, the number of pixel units whose depths belong to a corresponding depth interval is determined according to the set depth intervals, and the proportion of pixel units in the corresponding depth interval is obtained according to the ratio of the number of pixel units in each depth interval to the total number of pixel units of the depth image. Then, the depth distribution is obtained according to the proportion of pixel units in each depth interval. The above process will be described in detail below in conjunction with Embodiment 3. FIG. 3 is a flowchart of a parameter adjustment method for a depth sensor according to a third embodiment of the present disclosure.

As shown in FIG. 3, Block 102 may further comprise Blocks 301-303:
Block 301: according to the set depth intervals, determining the number of pixel units whose depths belong to a corresponding depth interval to obtain a first number of pixel units.

The set depth intervals may be the distance from the background region to the TOF, the distance from the foreground region to the TOF, and/or the distance from the middle ground region to the TOF, which is not limited in the embodiment.

In the embodiment of the present disclosure, in order to determine the depth distribution in the depth image, after the depth image collected by the depth sensor is acquired, a statistical analysis is performed on respective pixel units of the depth image within the set depth intervals. Specifically, the number of pixel units of the depth image whose depths belong to a corresponding depth interval is determined to obtain the first number of pixel units.

For example, the number of pixel units in the foreground region of the depth image, the number of pixel units in the middle ground region thereof, and number of pixel units in the background region thereof are determined separately.

Block 302: obtaining the proportion of pixel units in the corresponding depth interval according to the ratio of the first number of pixel units to the total number of pixel units of the depth image.

In the embodiment of the present disclosure, after the number of pixel units whose depths belong to the corresponding depth interval is determined according to the set depth intervals to obtain the first number of pixel units, the ratio of the first number of pixel units to the total number of pixel units of the depth image is calculated to obtain the proportion of pixel units in the corresponding depth interval.

Block 303: obtaining the depth distribution according to the proportion of pixel units in each depth interval.

In the embodiment of the present disclosure, after the proportion of pixel units in each depth interval is obtained according to the ratio of the first number of pixel units to the total number of pixel units of the depth image, the depth distribution in the depth image of the shooting scene can be determined according to the proportion of pixel units in each depth interval.

Therefore, the operation parameters corresponding to the depth distribution can be determined by determining the operation parameter table according to the corresponding relationship between the depth distribution and the operation parameters, so as to adjust the operation parameters of the depth sensor according to the depth distribution.

The parameter adjustment method for the depth sensor of the embodiment of the present disclosure determines the number of pixel units whose depths belong to a corresponding depth interval according to the set depth intervals to obtain a first number of pixel units, obtains the proportion of pixel units in the corresponding depth interval according to the ratio of the first number of pixel units to the total number of pixel units of the depth image, and obtains the depth distribution according to the proportion of pixel units in each depth interval. As a result, the scene distribution can be accurately determined, so as to adjust the operation parameters of the depth sensor according to the scene distribution, thereby improving the quality of the depth image.

Optionally, in Block 102, the statistical analysis is performed on respective pixel units of the depth image to obtain the confidence coefficient distribution. Specifically, the number of pixel units whose depths belong to a corresponding confidence interval is determined according to the set depth intervals, and the proportion of pixel units in the corresponding confidence interval is obtained according to the ratio of the number of pixel units to the total number of pixel units of the depth image to further obtain the confidence distribution. The above process will be described in detail below in conjunction with Embodiment 4. FIG. 4 is a flowchart of a parameter adjustment method for a depth sensor provided in Embodiment 4 of the present disclosure.

As shown in FIG. 4, Block 102 may further comprise the following steps:
Block 401: according to the set confidence intervals, determining the number of pixel units whose depths belong to a corresponding confidence interval to obtain a second number of pixel units.

The set confidence intervals are determined according to the intensity of the reflected light.

Because there may be abnormal points and interference points in the depth image, or only a small background region exists in the depth image, for example, only a small corner exists in the depth image. Thus, it is obviously unreasonable that there is a background beyond the measurement range in the depth image. Therefore, optionally, in order to improve the accuracy of the determination result, the number of pixel units of the depth image whose depths belong to a corresponding confidence interval is determined according to the set confidence intervals to obtain a second number of pixel units.

Block 402: obtaining the proportion of pixel units in the corresponding confidence interval according to the ratio of the second number of pixel units to the total number of pixel units of the depth image.

In the embodiment of the present disclosure, after the number of pixel units whose depths belong to a corresponding confidence interval is determined according to the set depth intervals to obtain the second number of pixel units, the ratio of the second number of pixel units to the total number of pixel units of the depth image is calculated to obtain the proportion of pixel units in the corresponding confidence interval.

Block 403: obtaining the confidence distribution according to the proportion of pixel units in each confidence interval.

In the embodiment of the present disclosure, after the proportion of pixel units in the corresponding confidence interval is obtained according to the ratio of the second number of pixel units to the total number of pixel units of the depth image, the confidence distribution in the depth image can be obtained.

That is, when the proportion of pixel units in each confidence interval is larger, it can be determined that the background is farther, and the scene type can be identified as a remote shooting scene. Therefore, the target parameters distribution corresponding to the confidence distribution can be determined by determining the operation parameter table according to the obtained confidence distribution.

The parameter adjustment method for the depth sensor of the embodiment of the present disclosure determines the number of pixel units whose depths belong to a corresponding confidence interval according to the set confidence intervals to obtain a second number of pixel units, obtains the proportion of pixel units in the corresponding confidence interval according to the ratio of the second number of pixel units to the total number of pixel units of the depth image, and obtains the confidence distribution according to the proportion of pixel units in each confidence interval. Therefore, the scene type can be determined according to the confidence distribution, so that the depth sensor adopts corresponding operation parameters in different scenes, which improves the quality of the depth image.

Optionally, on the basis of the foregoing embodiments, the scene type may be determined according to the depth distribution and the confidence distribution, so as to adjust the operation parameters of the depth sensor according to the scene type. The above process will be described in detail below in conjunction with Embodiment 5. FIG. 5 is a flowchart of a parameter adjustment method for a depth sensor provided in Embodiment 5 of the present disclosure.

As shown in FIG. 5, the parameter adjustment method comprises blocks 501-503.

Block 501: acquiring a depth image collected by the depth sensor.

Block 502: performing a statistical analysis on respective pixel units of the depth image to obtain a depth distribution and a confidence coefficient distribution.

In the embodiment of the present disclosure, for the implementation process of Block 501 to Block 502, please refer to the implementation process of Block 101 to Block 102 in Embodiment 1, which will not be repeated here.

Block 503: determining the scene type according to the depth distribution and the confidence coefficient distribution.

In the embodiment of the present disclosure, the region of interest can be identified from as imaging image which is acquired synchronously with the depth image, and the depth and the confidence coefficient of the depth corresponding to each pixel unit in the region of interest can be determined according to the depth image. The scene type is determined according to the depth and the confidence coefficient of the depth corresponding to each pixel unit in the region of interest.

The closer the background is to the depth camera, the larger the confidence coefficient of the depth is; the farther the background is to the depth camera, the smaller the confidence coefficient of the depth is. Therefore, in the embodiment of the present disclosure, according to the confidence coefficient distribution corresponding to each pixel unit in the region of interest in the depth image, whether there is a background beyond the measurement range in the region of interest can be determined.

Optionally, it can be determined whether there is a pixel unit having a confidence coefficient smaller than a first confidence threshold in the region of interest. If so, it is determined that there is a background beyond the measurement range in the region of interest; if not, it is determined that there is no background beyond the measurement range in the region of interest.

The first confidence threshold may be determined in advance according to the measurement range. For example, the measurement range corresponding to closeup shooting may be determined in advance, so that the first confidence threshold may be determined based on the measurement range. Alternatively, the measurement range corresponding to distant shooting may be determined in advance, so that the first confidence threshold is determined according to the measurement range. When the user captures an image, it may be determined whether the shooting is close shooting or distant shooting according to the user's operation, so that the corresponding first confidence threshold may be determined.

There may be abnormal points or interference points in the region of interest, or only a small background region exists in the region of interest, for example, only a small corner exists in the region of interest. Therefore, if there are only a few or a small number of pixel units whose confidence coefficients of the depth are less than the confidence threshold in the imaging image, it is obviously unreasonable to determine that there is a background beyond the measurement range in the region of interest.

Therefore, optionally, in order to improve the accuracy of the determination result, the number of pixel units in the region of interest whose corresponding confidence coefficients are smaller than the confidence threshold may be determined to obtain the first number of pixel units, the ratio of the first number of pixel units to the total number of pixel units in the region of interest is determined to obtain a first ratio, and it is determined whether the first ratio is greater than the first threshold. If so, it is determined that there is a background beyond the measurement range in the region of interest, otherwise, it is determined that there is no background beyond the measurement range in the region of interest. The first ratio is preset, for example, the first ratio may be 10%.

When it is determined that there is a background beyond the measurement range in the region of interest, that is the background is far away, the scene type to which the region of interest belongs is identified as the first scene type.

When it is determined that there is no background beyond the measurement range in the region of interest, the distance level between the background and the foreground in the region of interest can be determined according to the depth distribution corresponding to each pixel unit in the region of interest.

Optionally, the maximum depth and the minimum depth may be determined according to the depth distribution of respective pixel units in the region of interest, and the distance level between the background and foreground in the region of interest is determined according to the ratio or difference between the maximum depth and the minimum depth.

There may be abnormal points and interference points in the region of interest, resulting in that the confidence coefficient of the depth of the corresponding pixel unit is relatively small (away from the camera), and it is obviously unreasonable that the depth corresponding to such pixel unit is used as the maximum depth. Therefore, as another possible implementation, in order to improve the accuracy of the determination result, target depths whose confidence coefficients are greater than the second confidence threshold may be selected from the depths of the respective pixel units for the region of interest, and the maximum depth and the minimum depth are determined in the target depths, so that the distance level between the background and the foreground in the region of interest may be determined according to the ratio or difference between the maximum depth and the minimum depth. Wherein, the second confidence threshold is predetermined.

For example, it is determined that the distance level is larger when the ratio between the maximum depth and the minimum depth is larger or the difference between the maximum depth and the minimum depth is larger, and that the distance level is smaller when the ratio between the maximum depth and the minimum depth is smaller or the difference between the maximum depth and the minimum depth is smaller. Wherein, the larger the distance level is, the longer the distance between the foreground and the background is, and the smaller the distance level is, the shorter the distance between the foreground and the background is.

In embodiment of the present disclosure, after the distance level is determined, it is possible to determine whether the region of interest belongs to the second scene type or the third scene type according to the distance level. Wherein, the distance between the background and the foreground in the second scene type is longer than the distance between the background and the foreground in the third scene type.

Optionally, a correspondence relationship between the distance level and the scene type may be established in advance. In the present disclosure, after the distance level is determined, the foregoing correspondence relationship may be determined to determine the scene level to which the region of interest belongs.

For example, when the ratio or difference between the maximum depth and the minimum depth is within a first range, the distance level is determined to be Level 1; and when the ratio or difference between the maximum depth and the minimum depth is within a second range, the distance level is determined to be Level 2, and a correspondence relationship between Level 1 and Scene Type 3 and a correspondence relationship between Level 2 and Scene Type 2 is established. Therefore, in the present disclosure, after the maximum depth and the minimum depth are determined, it may be determined whether the ratio or difference between the maximum depth and the minimum depth is within the first range or the second range. If it is within the first range, the distance level is determined to be Level 1, and the region of interest belongs to Scene Type 3. If it is within the second range, the distance level is determined to be Level 2, and the region of interest belongs to Scene Type 2.

Block 504: adjusting the operation parameters of the depth sensor according to the scene type.

The operation parameter table may be obtained according to an experimental test and may also be calculated according to TOF hardware parameters. Certainly, it may also be generated by other methods, which is not limited in the embodiment.

Optionally, the correspondence relationship between the operation parameters of the depth sensor and the scene type may be stored in the operation parameter table in advance. Therefore, in the present disclosure, after the scene type is determined according to the depth distribution and the confidence coefficient distribution, the foregoing operation parameter table may be determined to obtain frequency and power corresponding to the scene type.

For example, the correspondence relationship between the operation parameters of the depth sensor and the scene type stored in the operation parameter table is as follows. The first scene type corresponds to dual-frequency and high power, the second scene type corresponds to single-frequency or dual-frequency and medium power, and the third scene type corresponds to single-frequency and low power. In the example, when it is determined that the scene type is the third scene type, at this time, the background is relatively close, and the depth sensor is adjusted to emit infrared light at single-frequency and low power.

When the depth sensor of the embodiment collects the depth image, the frequency of the emitted infrared light comprises two cases: single-frequency and dual-frequency. For example, the depth sensor may emit light of any one of two frequencies of 40 Hz and 60 Hz, or may emit light at two frequencies of 40 Hz and 60 Hz at the same time.

In the embodiment of the present disclosure, after the operation parameter table is determined according to the scene type to obtain the corresponding frequency and power, the operation parameters of the depth sensor are adjusted to the determined frequency and power.

The parameter adjustment method of the embodiment of the present disclosure determines the scene type according to the depth distribution and the confidence coefficient distribution and adjusts the operation parameters of the depth sensor according to the scene type. Therefore, by adjusting the operation parameters of the depth sensor to the operation parameters corresponding to different scene types, the technical problem of lower quality of collected depth images caused by using a depth sensor with fixed operation parameters to collect depth images in different scenarios in the prior art may be avoided, thereby ensuring the quality of the output depth image.

The present disclosure provides a parameter adjustment for a depth sensor.

FIG. 6 is a block diagram of a parameter adjustment device for a depth sensor according to an embodiment of the present disclosure.

The parameter adjustment device for the depth sensor may be disposed in an electronic device. The electronic device may a mobile terminal or a smart camera, which is not limited herein. The mobile terminal may be a hardware device such as a mobile phone, a tablet computer, a personal digital assistant, or a wearable device which has an operation system, a touch screen, and/or a display screen.

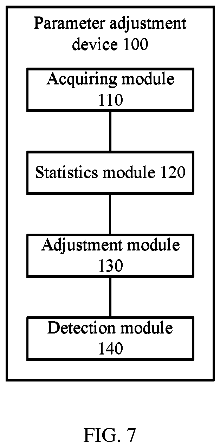

As shown in FIG. 7, the parameter adjustment device 100 for the depth sensor comprises an acquiring module 110, a statistics module 120, and an adjustment module 130.

The acquiring module 110 is configured to acquire a depth image collected by the depth sensor, where each pixel unit of the depth image has a corresponding depth and a confidence coefficient of the depth.

In the embodiment of the present disclosure, the electronic device may comprise a depth camera or a TOF video camera. The depth image is acquired by a depth sensor built in the depth camera or the TOF video camera, and each pixel unit of the collected depth image has a corresponding depth and a confidence coefficient of the depth.

Wherein, the depth camera may comprise an infrared light source through which a light signal is emitted outwardly, and a photosensitive module configured to receive a reflected light signal, so that distance measurement may be performed according to a phase change of the emitted light signal and the reflected light signal to obtain the corresponding depth.

In other words, the depth corresponding to each pixel unit is generated based on the phase difference of the infrared light, and the confidence coefficient of the depth is determined based on the light intensity of the reflected light. Wherein, the shorter the distance to the depth camera is, the smaller the depth is, and the larger the confidence coefficient of the depth is. The longer the distance to the depth camera is, the larger the depth is, and the smaller the confidence coefficient of the depth is.

The statistics module 120 is configured to perform a statistical analysis on respective pixel units of the depth image to obtain a depth distribution and a confidence coefficient distribution. The depth distribution is used to indicate the proportion of pixel units in each depth interval. The confidence coefficient distribution is used to indicate the proportion of pixel units in each confidence interval.

After the embodiment of the present disclosure acquires the depth image collected by the depth sensor, the statistics module 120 performs the statistical analysis on respective pixel units of the depth image to obtain the depth distribution and the confidence coefficient distribution.

Optionally, the statistics module 120 performs the statistical analysis on respective pixel units of the depth image to obtain the depth distribution. Specifically, depth intervals are preset for the acquired depth image, and the number of pixel units in each depth interval of the depth image is determined. The ratio of the number of pixel units in each depth interval to the total number of pixel units of the depth image is calculated to obtain the proportion of pixel units in each depth interval and further obtain the depth distribution.

Optionally, the statistics module 120 performs the statistical analysis on respective pixel units of the depth image to obtain the confidence coefficient distribution. Specifically, confidence intervals are preset for the acquired depth image, and the number of pixel units whose depths belong to a corresponding confidence interval is determined. The ratio of the number of pixel units in each confidence interval to the total number of pixel units of the depth image is calculated to obtain the proportion of pixel units in a corresponding confidence interval and further obtain the confidence coefficient distribution.

The adjustment module 130 is configured to adjust operation parameters of the depth sensor according to the depth distribution and the confidence coefficient distribution.

In the embodiment of the present disclosure, after the statistical analysis is performed on respective pixel units of the depth image to obtain the depth distribution and the confidence coefficient distribution, the adjustment module 130 adjusts the power of infrared light emitted by the TOF and the frequency of the infrared light during the operation of the depth sensor, wherein the frequency of infrared light comprises a high frequency, a dual-frequency and a low frequency.

The closer the background is to the depth camera, the smaller the depth is, and the larger the confidence coefficient of the depth is. The farther the background is to the depth camera, the larger the depth is, and the smaller the confidence coefficient of the depth is. Therefore, in the embodiment of the present disclosure, according to the depth distribution and the confidence coefficient distribution, the distance from the captured depth image to the depth camera is determined. Then, the operation parameters of the depth sensor are adjusted according to the distance from the depth image to the depth camera.

Optionally, the statistical analysis is performed on respective pixel units of the depth image to determine that the proportion of pixel units is the maximum in a smaller depth interval and that the proportion of pixel units is the maximum in a larger confidence interval. In this case, the depth sensor can be adjusted to use a high frequency for image acquisition. When the confidence coefficient distribution is smaller and the depth is larger, the depth sensor can be adjusted to use a low frequency for image acquisition. For example, when the confidence coefficient is smaller and the depth is about 2.5m, the frequency of the depth sensor is adjusted to 40 Hz. When the confidence coefficient distribution is much smaller and the depth is much larger, the depth sensor can be adjusted to use a dual-frequency for image acquisition. For example, when the confidence coefficient is smaller and the depth exceed 3m, the depth sensor is adjusted to use a dual-frequency for image acquisition to improve the accuracy.

Optionally, after the statistical analysis is performed on respective pixel units of the depth image to obtain the depth distribution and the confidence coefficient distribution, an operation parameter table can be determined according to the depth distribution and the confidence coefficient distribution to obtain corresponding target parameters. Then, the operation parameters of the depth sensor are adjusted to the target parameters.

Further, the adjustment module 130 comprises a determining unit and an adjustment unit. The determining unit is configured to query an operation parameter table according to the depth distribution and the confidence coefficient distribution to obtain corresponding target parameters. The adjustment unit is configured to adjust the operation parameters of the depth sensor to the target parameters.

Optionally, the depth sensor is a depth camera, and the operation parameters comprise the power of infrared light emitted by the TOF and the frequency of the infrared light.

Optionally, the frequency of the infrared light comprises a single-frequency and a dual-frequency. Referring to FIG. 7, the parameter adjustment device 100 for the depth sensor further comprises a detection module that is configured to detect images of respective frames which are continuously acquired to determine the degree of scene change based on the changes in the images between two adjacent frames.

Imaging images are two-dimensional images. For example, the electronic device may comprise an RGB camera, and the imaging images are acquired through the RGB camera.

In the embodiment of the present disclosure, detection module 140 selects the imaging images of two adjacent frames from the imaging images of the respective frames, which are continuously required by the electronic device, to determine the degree of scene change according to the changed portions between the imaging images of the two adjacent frames.

Optionally, the image difference between imaging images of two adjacent frames can be calculated to determine the degree of scene change according to the degree of image difference. In other words, the greater the degree of difference between the imaging images of the two adjacent frames is, the greater the degree of scene change is. Similarly, the smaller the degree of difference between the imaging images of the two adjacent frames is, the smaller the degree of scene change is.

Optionally, the degree of scene change can also be determined by calculating coordinate difference corresponding to the respective pixel units of imaging images of two adjacent frames. In other words, the greater the coordinate difference corresponding to the respective pixel units of the imaging images of the two adjacent frames is, the greater the degree of scene change is. Similarly, the smaller the coordinate difference between the imaging images of the two adjacent frames is, the smaller the degree of scene change is.

Optionally, the acquiring module 110 is further configured to set the depth sensor to the maximum power and a dual-frequency upon a condition that the degree of scene change is greater than a threshold degree.

In the embodiment of the present disclosure, when it is determined that the degree of scene change is greater than the threshold degree according to the changed portions between the imaging images of the two adjacent frames, it is determined that the shooting scene has changed when the imaging images of the adjacent two frames are required. At this time, the depth sensor can be set to the maximum power and the dual-frequency to collect all the information of the scene as accurately as possible.

The frequency of the infrared light emitted by the depth camera comprises two cases: single-frequency and dual-frequency. For example, the depth camera may emit light of any one of two frequencies of 40 Hz and 60 Hz, or may emit light at two frequencies of 40 Hz and 60 Hz at the same time.

In the embodiment of the present disclosure, after the depth sensor is set to the maximum power and the dual-frequency, the depth sensor is controlled to collect the depth image at the maximum power and the dual-frequency, so as to obtain the depth image collected by the depth sensor at the maximum power and the dual-frequency.

In the embodiment of the present disclosure, setting the depth sensor to acquire a depth image at the dual-frequency refers to controlling the depth sensor to simultaneously use light measurement at two frequencies to obtain two depths, averaging the two depths or summing the weighted two depths to obtain one depth, and, finally, outputting the corresponding depth image.

Optionally, the statistics module 120 is further configured to determine the number of pixel units whose depths belong to a corresponding depth interval according to the set depth intervals to obtain a first number of pixel units, configured to obtain the proportion of pixel units in the corresponding depth interval according to the ratio of the first number of pixel units to the total number of pixel units of the depth image, and configured to obtain the depth distribution according to the proportion of pixel units in each depth interval.

In the embodiment of the present disclosure, in order to determine the depth distribution in the depth image, after the depth image collected by the depth sensor is acquired, a statistical analysis is performed on respective pixel units of the depth image within the set depth intervals. Specifically, the number of pixel units of the depth image whose depths belong to a corresponding depth interval is determined to obtain the first number of pixel units. For example, the number of pixel units in the foreground region of the depth image, the number of pixel units in the middle ground region thereof, and number of pixel units in the background region thereof are determined separately. In the embodiment of the present disclosure, after the number of pixel units whose depths belong to the corresponding depth interval is determined according to the set depth intervals to obtain the first number of pixel units, the ratio of the first number of pixel units to the total number of pixel units of the depth image is calculated to obtain the proportion of pixel units in the corresponding depth interval. After the proportion of pixel units in each depth interval is obtained according to the ratio of the first number of pixel units to the total number of pixel units of the depth image, the depth distribution in the depth image of the shooting scene can be determined according to the proportion of pixel units in each depth interval.

Optionally, the statistics module 120 is further configured to determine the number of pixel units whose depths belong to a corresponding confidence interval according to the set confidence intervals to obtain a second number of pixel units, configured to obtain the proportion of pixel units in the corresponding confidence interval according to the ratio of the second number of pixel units to the total number of pixel units of the depth image, and configured to obtain the confidence distribution according to the proportion of pixel units in each confidence interval.

Because there may be abnormal points and interference points in the depth image, or only a small background region exists in the depth image, for example, only a small corner exists in the depth image. Thus, it is obviously unreasonable that there is a background beyond the measurement range in the depth image. Therefore, optionally, in order to improve the accuracy of the determination result, the number of pixel units of the depth image whose depths belong to a corresponding confidence interval is determined according to the set confidence intervals to obtain a second number of pixel units. After the number of pixel units whose depths belong to a corresponding confidence interval is determined according to the set depth intervals to obtain the second number of pixel units, the ratio of the second number of pixel units to the total number of pixel units of the depth image is calculated to obtain the proportion of pixel units in the corresponding confidence interval. After the proportion of pixel units in the corresponding confidence interval is obtained according to the ratio of the second number of pixel units to the total number of pixel units of the depth image, the confidence distribution in the depth image can be obtained.

That is, when the proportion of pixel units in each confidence interval is larger, it can be determined that the background is farther, and the scene type can be identified as a remote shooting scene. Therefore, the target parameters distribution corresponding to the confidence distribution can be determined by determining the operation parameter table according to the obtained confidence distribution.

The foregoing explanation of the embodiment of the parameter adjustment method for the depth sensor is also applicable to the parameter adjustment device for the depth sensor of the embodiment, and will not be repeated here.

The parameter adjustment device for the depth sensor of the embodiment of the present disclosure acquires a depth image collected by the depth sensor, wherein each pixel unit of the depth image has a corresponding depth and a confidence coefficient of the depth; performs a statistical analysis on respective pixel units of the depth image to obtain a depth distribution and a confidence coefficient distribution, wherein the depth distribution is used to indicate the proportion of pixel units in each depth interval, the confidence coefficient distribution is used to indicate the proportion of pixel units in each confidence interval; adjusts operation parameters of the depth sensor according to the depth distribution and the confidence coefficient distribution. Therefore, the operation parameters of the depth sensor are determined according to the depth distribution and the confidence coefficient distribution in the depth image, which avoids the technical problem of lower quality of collected depth images caused by using a depth sensor with fixed operation parameters to collect depth images in different scenarios in the prior art, thereby ensuring the quality of the output depth images.

According to an embodiment of the present disclosure, an electronic device includes a processor and a memory storing computer program executable by the processor to perform any one or more steps of the method of the above-mentioned embodiments.

According to an embodiment of the present disclosure, a computer readable storage medium is disclosed. The computer readable storage medium is configured to store a computer program executed by a processor of a computer to perform any one or more steps of the method of the above-mentioned embodiments. The computer includes the electronic device.

In the description of this specification, the description of the terms "one embodiment", "some embodiments", "examples", "specific examples", or "some examples", and the like, means to refer to the specific feature, structure, material or characteristic described in connection with the embodiments or examples being included in at least one embodiment or example of the present disclosure. In the present specification, the term of the above schematic representation is not necessary for the same embodiment or example. Furthermore, the specific feature, structure, material, or characteristic described may be in combination in a suitable manner in any one or more of the embodiments or examples. In addition, it will be apparent to those skilled in the art that different embodiments or examples described in this specification, as well as features of different embodiments or examples, may be combined without contradictory circumstances.

In addition, the term "first", "second" are for illustrative purposes only and are not to be construed as indicating or imposing a relative importance or implicitly indicating the number of technical features indicated. Thus, a feature that limited by "first", "second" may expressly or implicitly include at least one of the features. In the description of the present disclosure, the meaning of "plural" is two or more, unless otherwise specifically defined.

The logic and/or blocks described in the flowchart or otherwise described herein, for example, a sequence list of an executable instruction for implementing a logic function, may be implemented in any computer-readable medium for use by an instruction execution system, device or equipment (such as a computer-based system, a system including a processor, or other system that can access instructions from an instruction execution system, device or equipment and execute instructions), or may be used in conjunction with the instruction execution system, device or equipment. As used herein, "computer-readable medium" may be any device that may include a store, communication, broadcast, or transmission program for use by an instruction execution system, device or equipment, or in conjunction with such instruction execution systems, device, or equipment. A more specific example (non-exhaustive list) of the computer-readable medium includes the following: an electrical connection portion (an electronic device) with one or more routing, a portable computer disk cartridge (a magnetic device), a random access memory (RAM), a read only memory (ROM), an erasable programmable read only memory (EPROM or a flash memory), a fiber optic device, and a portable compact disc read only memory (CDROM). In addition, the computer-readable medium may even be a paper or other suitable medium on which the program may be printed. For example, through performing an optical scan on the paper or other media, followed by editing, interpretation, or, if necessary, other suitable methods to process, the program is obtained in an electronic manner, and then the program is stored in a computer memory.

It should be understood that the various parts of the present disclosure may be implemented by using hardware, software, firmware, or combinations thereof. In the above embodiment, the plurality of blocks or methods may be implemented by using software or firmware stored in the memory and executed by a suitable instruction execution system. For example, if the present disclosure is implemented by hardware, as in another embodiment, it may be implemented by any of the following techniques known in the art or a combination thereof: a discrete logic circuit of logic gates having a logic function for a data signal, an application specific integrated circuit with suitable combinational logic gates, a programmable gate array (PGA), a field programmable gate array (FPGA), and the like.

It will be understood by those of ordinary skill in the art that all or part of the blocks for implementing the method of the embodiments described above may be accomplished by a program that commands the relevant hardware. The program may be stored in a computer readable storage medium. When the program is executed, one of the blocks of the method embodiment or a combination thereof may be included.

In addition, the functional units in the various embodiments of the present disclosure may be integrated into a processing module, or each unit may be physically present individually, or two or more units may be integrated into one module. The above integrated module may be implemented by using hardware, or may be implemented by using a software function module. The integrated module may be stored in a computer readable storage medium if it is implemented by a software function module and is sold or used as a standalone product.

The above-mentioned storage medium may be a read-only memory, a magnetic disk, or an optical disk. While the embodiments of the present disclosure have been shown and described above, it is to be understood that the above embodiments are exemplary and are not to be construed as limiting the present disclosure. One of ordinary skill in the art may make variations, modifications, substitutions and alterations to the above embodiments within the scope of the present disclosure.

## Claims

1. A parameter adjustment method for a depth sensor, **characterized in that** the method comprises:
acquiring a depth image collected by the depth sensor, wherein each pixel unit of the depth image has a corresponding depth and a confidence coefficient of the depth;
performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and
adjusting operation parameters of the depth sensor according to the depth distribution and the confidence coefficient distribution.

2. The parameter adjustment method of claim 1, **characterized in that** the adjusting the operation parameters of the depth sensor according to the depth distribution and the confidence coefficient distribution comprises:
determining an operation parameter table according to the depth distribution and the confidence coefficient distribution to obtain corresponding target parameters;
adjusting the operation parameters of the depth sensor to the target parameters.

3. The parameter adjustment method of claim 1, **characterized in that** the depth sensor is a depth camera, the operation parameters comprise power of infrared light emitted by the depth camera and the frequency of the infrared light, the frequency of the infrared light comprises a single-frequency and a dual-frequency;
before acquiring the depth image collected by the depth sensor, the parameter adjustment method further comprises:
detecting images of respective frames which are continuously acquired to determine a degree of scene change based on changed portions between imaging images of two adjacent frames;
acquiring the depth image collected by the depth sensor comprises:
upon a condition that the degree of scene change is greater than a threshold degree, setting the depth sensor to a maximum power and a dual-frequency;
acquiring the depth image collected by the depth sensor at the maximum power and the dual-frequency.

4. The parameter adjustment method of claim 3, **characterized in that** the confidence coefficient is determined based on intensity of infrared light detected by the depth camera.

5. The parameter adjustment method of any one of claims 1-4, **characterized in that** the performing the statistical analysis on respective pixel units of the depth image to obtain the depth distribution and the confidence coefficient distribution comprises:
according to the set depth intervals, determining the number of pixel units whose depths belong to a corresponding depth interval to obtain a first number of pixel units;
obtaining a proportion of pixel units in the corresponding depth interval according to a ratio of the first number of pixel units to the total number of pixel units of the depth image;
obtaining the depth distribution according to the proportion of pixel units in each depth interval.

6. The parameter adjustment method of any one of claims 1-4, **characterized in that** the performing the statistical analysis on respective pixel units of the depth image to obtain the depth distribution and the confidence coefficient distribution comprises:
according to the set confidence intervals, determining the number of pixel units whose depths belong to a corresponding confidence interval to obtain a second number of pixel units;
obtaining a proportion of pixel units in the corresponding confidence interval according to a ratio of the second number of pixel units to the total number of pixel units of the depth image;
obtaining the confidence distribution according to the proportion of pixel units in each confidence interval.

7. A parameter adjustment device for a depth sensor, **characterized in that** the parameter adjustment device comprises:
an acquiring module, configured to acquire a depth image collected by the depth sensor, wherein each pixel unit of the depth image has a corresponding depth and a confidence coefficient of the depth;
a statistics module, configured to perform a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval;
an adjustment module, configured to adjust operation parameters of the depth sensor according to the depth distribution and the confidence coefficient distribution.

8. The parameter adjustment device of claim 7, **characterized in that** the adjustment module comprises:
a determining unit, configured to determine an operation parameter table according to the depth distribution and the confidence coefficient distribution to obtain corresponding target parameters;
an adjustment unit, configured to adjust the operation parameters of the depth sensor to the target parameters.

9. An electronic device **characterized in that** the electronic device comprises a processor and a memory storing a computer program executable by the processor to perform operations comprising:
acquiring a depth image collected by the depth sensor, wherein each pixel unit of the depth image has a corresponding depth and a confidence coefficient of the depth;
performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and
adjusting operation parameters of the depth sensor according to the depth distribution and the confidence coefficient distribution.

10. The electronic device of claim 9, **characterized in that** the adjusting the operation parameters of the depth sensor according to the depth distribution and the confidence coefficient distribution comprises:
determining an operation parameter table according to the depth distribution and the confidence coefficient distribution to obtain corresponding target parameters;
adjusting the operation parameters of the depth sensor to the target parameters.

11. The electronic device of claim 9, **characterized in that** the depth sensor is a depth camera, the operation parameters comprise power of infrared light emitted by the depth camera and the frequency of the infrared light, the frequency of the infrared light comprises a single-frequency and a dual-frequency;
before acquiring the depth image collected by the depth sensor, the parameter adjustment method further comprises:
detecting images of respective frames which are continuously acquired to determine a degree of scene change based on changed portions between imaging images of two adjacent frames;
acquiring the depth image collected by the depth sensor comprises:
upon a condition that the degree of scene change is greater than a threshold degree, setting the depth sensor to a maximum power and a dual-frequency;
acquiring the depth image collected by the depth sensor at the maximum power and the dual-frequency.

12. The electronic device of claim 11, **characterized in that** the confidence coefficient is determined based on intensity of infrared light detected by the depth camera.

13. The electronic device of any one of claims 9-12, **characterized in that** the performing the statistical analysis on respective pixel units of the depth image to obtain the depth distribution and the confidence coefficient distribution comprises:
according to the set depth intervals, determining the number of pixel units whose depths belong to a corresponding depth interval to obtain a first number of pixel units;
obtaining a proportion of pixel units in the corresponding depth interval according to a ratio of the first number of pixel units to the total number of pixel units of the depth image;
obtaining the depth distribution according to the proportion of pixel units in each depth interval.

14. The electronic device of any one of claims 9-12, **characterized in that** the performing the statistical analysis on respective pixel units of the depth image to obtain the depth distribution and the confidence coefficient distribution comprises:
according to the set confidence intervals, determining the number of pixel units whose depths belong to a corresponding confidence interval to obtain a second number of pixel units;
obtaining a proportion of pixel units in the corresponding confidence interval according to a ratio of the second number of pixel units to the total number of pixel units of the depth image;
obtaining the confidence distribution according to the proportion of pixel units in each confidence interval.

15. A computer-readable storage medium storing computer program executable by a processor to perform operations comprising:
acquiring a depth image collected by the depth sensor, wherein each pixel unit of the depth image has a corresponding depth and a confidence coefficient of the depth;
performing a statistical analysis on respective pixel units of the depth image to obtain a depth distribution and a confidence coefficient distribution, wherein the depth distribution is used to indicate a proportion of pixel units in each depth interval, the confidence coefficient distribution is used to indicate a proportion of pixel units in each confidence interval; and
adjusting operation parameters of the depth sensor according to the depth distribution and the confidence coefficient distribution.

16. The computer-readable storage medium of claim 15, **characterized in that** the adjusting the operation parameters of the depth sensor according to the depth distribution and the confidence coefficient distribution comprises:
determining an operation parameter table according to the depth distribution and the confidence coefficient distribution to obtain corresponding target parameters;
adjusting the operation parameters of the depth sensor to the target parameters.

17. The computer-readable storage medium of claim 15, **characterized in that** the depth sensor is a depth camera, the operation parameters comprise power of infrared light emitted by the depth camera and the frequency of the infrared light, the frequency of the infrared light comprises a single-frequency and a dual-frequency;
before acquiring the depth image collected by the depth sensor, the operations further comprise:
detecting images of respective frames which are continuously acquired to determine a degree of scene change based on changed portions between imaging images of two adjacent frames;
acquiring the depth image collected by the depth sensor comprises:
upon a condition that the degree of scene change is greater than a threshold degree, setting the depth sensor to a maximum power and a dual-frequency;
acquiring the depth image collected by the depth sensor at the maximum power and the dual-frequency.

18. The computer-readable storage medium of claim 17, **characterized in that** the confidence coefficient is determined based on intensity of infrared light detected by the depth camera.

19. The computer-readable storage medium of any one of claims 15-18, **characterized in that** the performing the statistical analysis on respective pixel units of the depth image to obtain the depth distribution and the confidence coefficient distribution comprises:
according to the set depth intervals, determining the number of pixel units whose depths belong to a corresponding depth interval to obtain a first number of pixel units;
obtaining a proportion of pixel units in the corresponding depth interval according to a ratio of the first number of pixel units to the total number of pixel units of the depth image;
obtaining the depth distribution according to the proportion of pixel units in each depth interval.

20. The computer-readable storage medium of any one of claims 15-18, **characterized in that** the performing the statistical analysis on respective pixel units of the depth image to obtain the depth distribution and the confidence coefficient distribution comprises:
according to the set confidence intervals, determining the number of pixel units whose depths belong to a corresponding confidence interval to obtain a second number of pixel units;
obtaining a proportion of pixel units in the corresponding confidence interval according to a ratio of the second number of pixel units to the total number of pixel units of the depth image;
obtaining the confidence distribution according to the proportion of pixel units in each confidence interval.
